# EUROPÄISCHE PATENTSCHRIFT

(11) **EP 2 328 156 B1**
(45) Veröffentlichungstag und Bekanntmachung des Hinweises auf die Patenterteilung: **04.01.2012**
(21) Anmeldenummer: 09306139.8
(22) Anmeldetag: 26.11.2009
(51) Int. Cl.: H01B 12/16, F25D 29/00, F25D 3/10

(54) **Verfahren zum Betrieb einer Anordnung mit mindestens einem supraleitfähigen Kabel**
Method for operating an assembly with at least one superconducting cable
Procédé de fonctionnement d'un agencement doté d'au moins un câble supraconducteur

(43) Veröffentlichungstag der Anmeldung: 01.06.2011
(73) Patentinhaber: Nexans, 75008 Paris (FR)
(72) Erfinder: Soika, Rainer, Dr., 30559 Hannover (DE); Stemmle, Mark, Dr.-Ing., 30161 Hannover (DE)
(74) Vertreter: Döring, Roger

(56) Entgegenhaltungen:
- WO-A1-03/052775
- GB-A- 2 398 874
- US-A- 3 946 141
- US-A- 3 950 606

## Beschreibung

Die Erfindung bezieht sich auf ein Verfahren zum Betrieb einer Anordnung mit mindestens einem supraleitfähigen Kabelgemäß dem Oberbegriff des Patentanspruchs 1.

Ein solches Verfahren geht aus der WO 03/052775 A hervor.

Ein supraleitfähiges Kabel hat in der heutigen Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materialien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Bei Durchführung des eingangs beschriebenen Verfahrens bzw. bei Betrieb der zugehörigen Anordnung wird das flüssige Kühlmittel durch die Pumpe mit vorgegebenem Druck in den Kryostat hineingedrückt, durch denselben unter Beibehaltung des Drucks hindurchgeleitet und am Ende einer vorgegebenen Länge zur Rückkühlung abgeleitet. Für eine ausreichende Kühlung des zumindest einen supraleitfähigen Leiters des im Kryostat befindlichen Kabels muß eine erhebliche Menge an Kühlmittel auf die erforderliche niedrige Temperatur gebracht und im Vorratsraum sowie nach Möglichkeit auch im Kryostat bei dieser Temperatur gehalten werden. Wenn im Verlauf einer Übertragungsstrecke eine Beschädigung des Kryostats, insbesondere ein Leck in demselben auftritt, beispielsweise durch mechanische Beschädigung des Kryostats von außen, kann eine große Menge an Kühlmittel aus dem Kryostat austreten, bis beispielsweise ein Leck festgestellt wird. Das ist nicht nur teuer, sondern insbesondere dann auch für die Umwelt der Anordnung gefährlich, wenn flüssiger Stickstoff als Kühlmittel eingesetzt wird. Dieser Sachverhalt gilt auch dann, wenn ein Leck bereits in der Zuleitung des Kühlmittels zum Kryostat auftritt.

Die US 3 946 141 A beschreibt ein Verfahren zum Kühlen eines mit supraleitfähigen Leitern ausgerüsteten elektrischen Kabels, bei dem die Leiter in Form eines Koaxialkabels angeordnet sind. Das Kabel besteht aus zwei Teilen, die im mittleren Bereich des Kabels ineinander übergehen und an ihren Enden jeweils mit Endverschlüssen ausgerüstet sind. In seinem mittleren, die beiden Teile verbindenden Bereich wird dem Kabel aus einer Kühlstation mittels einer Pumpe ein Kühlmittel, wie beispielsweise Helium, aufgegeben, das von dort aus mit entgegengesetzter Strömungsrichtung in die beiden Teile des Kabels eingespeist wird. Das Kühlmittel wird jeweils an den Endverschlüssen des Kabels abgeleitet und in die Kühlstation zurückgeleitet.

Aus der US 3 950 606 geht ein Verfahren zum Kühlen eines supraleitfähigen Kabels hervor, dessen Leiter ebenfalls nach Art eines Koaxialkabels angeordnet sind, mit einen rohrförmigen Innenleiter und einem denselben unter Zwischenschaltung eines Dielektrikums konzentrisch umgebenden Außenleiter. Um den Außenleiter ist ein aus zwei durch einen Hohlraum getrennten Teilrohren bestehendes Rohr herumgelegt, durch welches ein Kühlmittel, beispielsweise Helium, hindurchgeleitet und mittels einer separaten Leitung zum Kühlaggregat zurückgeleitet wird. Das Kühlmittel wird im gleichen Sinne auch durch den rohrförmigen Innenleiter geleitet.

In der eingangs erwähnten WO 03/052775 A1 ist ein supraleitfähiges Kabel mit kaltem Dielektrikum beschrieben. Es ist in einem aus zwei durch eine Vakuumisolierung getrennten, konzentrisch zueinander verlaufenden Rohren bestehenden Kryostat untergebracht. Diese Schrift befaßt sich im wesentlichen mit der Durchverbindung des Kryostats, wenn mindestens zwei Längen einer solchen Anordnung miteinander verbunden werden sollen. Über die Einspeisung eines Kühlmittels in den Freiraum des Kryostats sind in der Schrift ebenso keine Angaben gemacht, wie über bei einer Beschädigung des Kryostats zu treffende Maßnahmen.

Der Erfindung liegt die Aufgabe zugrunde, das eingangs geschilderte Verfahren so zu gestalten, daß die Sicherheit einer Anordnung mit einem supraleitfähigen Kabel und einem dasselbe umgebenden Kryostat sowie deren Umgebung bei einer Beschädigung der Anordnung verbessert werden.

Diese Aufgabe wird gemäß den kennzeichnenden Merkmalen des Patentanspruchs 1 gelöst.

Bei Einsatz dieses Verfahrens wird die Unversehrtheit der Anordnung und insbesondere des Kryostats dauernd durch die überwachende Einheit festgestellt. Wenn eine Beschädigung des Kryostats auftritt, beispielsweise ein Leck, wird unmittelbar ein Signal an das Ventil und mit Vorteil gleichzeitig an die Pumpe gegeben. Das Ventil wird dann sofort geschlossen und die Pumpe wird gleichzeitig abgeschaltet, so daß kein weiteres Kühlmittel in den Kryostat bzw. aus dem Vorratsraum heraus gepumpt wird. Die überwachende Einheit kann mit Vorteil ein Druckmeßgerät sein, welches den Druck des Kühlmittels im Kryostat mißt.

Wenn in bevorzugter Ausführungsform nur der Druck des Kühlmediums im Kryostat überwacht wird, dann reicht pro Abschnitt der Übertragungsstrecke ein Druckmeßgerät aus. Zusätzlich kann die der Überwachung dienende Einheit aber auch beispielsweise Sensoren aufweisen, die entlang der Übertragungsstrecke angeordnet sind und zusätzlich die Unversehrtheit des Kryostats überwachen, ohne daß ein bis ins Innere desselben reichendes Leck vorhanden sein muß. Mittels solcher Sensoren kann beispielsweise eine Beschädigung des äußeren Rohres des Kryostats festgestellt werden, die zu einem Zusammenbruch der Vakuumisolierung zwischen den Rohren des Kryostats und damit zum Ausfall der die Kühlung des supraleitfähigen Leiters aufrechterhaltenden Funktion desselben führt. Auch in diesem Fall werden durch ein entsprechendes Signal das Ventil geschlossen und die Pumpe abgeschaltet.

Das Verfahren und die Anordnung nach der Erfindung werden anhand der Zeichnungen als Ausführungsbeispiel erläutert.

Es zeigen:
Fig. 1 in schematischer Darstellung eine Anordnung zur Durchführung des Verfahrens nach der Erfindung.
Fig. 2 einen Schnitt durch Fig. 1 längs der Linie II - II.

Im dargestellten Ausführungsbeispiel ist im Bereich eines Endenabschlusses der Anordnung nur ein Ventil eingezeichnet und in der folgenden Beschreibung erläutert. Es können jedoch auch zwei oder mehr Vorteile im Verlauf der Übertragungsstrecke angeordnet werden. Sowohl das Ventil als auch die das Kühlmittel bewegende Pumpe sind für die angegebenen tiefen Temperaturen bekannt und auf dem Markt erhältlich.

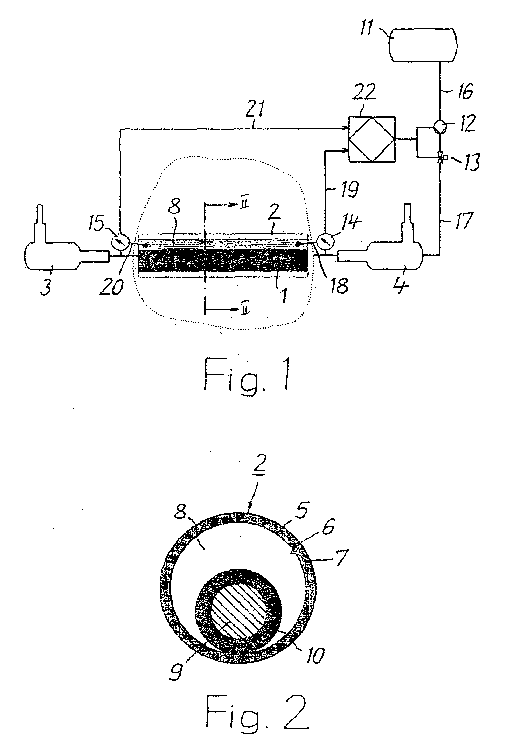

In Fig. 1 ist schematisch eine Übertragungsstrecke für elektrischen Strom mittels eines supraleitfähigen Kabels 1 dargestellt, das in einem Kryostat 2 angeordnet ist. Die Übertragungsstrecke verläuft im dargestellten Ausführungsbeispiel zwischen zwei Endenabschlüssen 3 und 4. Eine Übertragungsstrecke im Sinne der Erfindung kann aber prinzipiell auch zwischen einem Endenabschluß und einer Verbindungsmuffe bzw. zwei anderen sinnvollen Abschlüssen verlaufen. Im folgenden wird - stellvertretend auch für alle anderen Ausführungsformen - die zwischen den beiden Endenabschlüssen 3 und 4 verlaufende Übertragungsstrecke berücksichtigt.

Der Kryostat 2 der Übertragungsstrecke besteht gemäß Fig. 2 aus zwei mit Abstand konzentrisch zueinander angebrachten metallischen Rohren 5 und 6, zwischen denen sich eine Vakuumisolierung 7 befindet. Die Rohre 5 und 6 können quer zu ihrer Längsrichtung gewellt sein.

In dem Kryostat 2 soll mindestens ein supraleitfähiges Kabel 1 angeordnet sein, unter Freilassung eines Hohlraums 8 zum Durchleiten eines Kühlmittels, mit Vorteil von flüssigem Stickstoff. Der Aufbau des supraleitfähigen Kabels 1 ist an sich bekannt. Es wird daher auf denselben hier nicht genauer eingegangen. Das supraleitfähige Kabel 1 hat zumindest einen supraleitfähigen Leiter 9 und ein denselben umgebendes Dielektrikum 10.

Das supraleitfähige Kabel 1 und der Kryostat 2 sind einerseits elektrisch leitend und andererseits gasdicht an die Endenabschlüsse 3 und 4 angeschlossen. Die elektrische Durchverbindung des Kabels 1 und der gasdichte Anschluß des Kryostats 2 sind grundsätzlich bekannt, so daß darauf nicht näher eingegangen wird.

Zur Anordnung gehören im Bereich des Endenabschlusses 4 ein Vorratsraum 11, der das Kühlmittel für die Kühlung des Kabels 1 enthält, eine Pumpe 12, ein Ventil 13 und ein Druckmeßgerät 14. Im Bereich des Endenabschlusses 3 ist ein Druckmeßgerät 15 angeordnet.

Die Pumpe 12 ist einerseits über eine Rohrleitung 16 mit dem Vorratsraum 11 und andererseits über eine Rohrleitung 17 mit dem Endenabschluß 4 und weiterführend mit dem Hohlraum 8 des Kryostats 2 verbunden. In der Rohrleitung 17 ist das Ventil 13 angebracht. Das Druckmeßgerät 14 ist über eine nur schematisch angedeutete Rohrleitung 18, an deren Ende ein druckempfindlicher Sensor angebracht ist, mit dem Hohlraum 8 des Kryostats 2 und über eine elektrische Leitung 19 mit dem Ventil 13 verbunden. Es kann zusätzlich auch elektrisch leitend mit der Pumpe 12 verbunden sein. Das im Bereich des Endenabschlusses 3 angeordnete Druckmeßgerät 15 ist über eine wieder nur schematisch angedeutete Rohrleitung 20, an deren Ende ein druckempfindlicher Sensor angebracht ist, mit dem Hohlraum 8 des Kryostats 2 und über eine elektrische Leitung 21 mit dem Ventil 13 verbunden. Auch das Druckmeßgerät 15 kann elektrisch leitend mit der Pumpe 12 verbunden sein.

Die elektrischen Leitungen 19 und 21 dienen mit Vorteil auch zur Verbindung der Druckmeßgeräte 14 und 15 mit der Pumpe 12. Sie sind im dargestellten Ausführungsbeispiel gemäß Fig. 1 an eine elektrische Steuereinheit 22 angeschlossen, welche ihrerseits über elektrische Leitungen sowohl mit dem Ventil 13 als auch mit der Pumpe 12 verbunden ist.

Für das Verfahren bzw. die Anordnung nach der Erfindung reicht es prinzipiell aus, wenn der Druck des Kühlmittels im Bereich des Endenabschlusses 3 gemessen wird, weil hier der Druck auch bei einwandfrei arbeitender Anordnung am niedrigsten ist. Das bedeutet, daß die Anordnung prinzipiell mit dem Druckmeßgerät 15 auskommen kann. Da eine Beschädigung des Kryostats 2 aber auch in unmittelbarer Nähe des Endenabschlusses 4 auftreten kann, wird mit Vorteil auch das Druckmeßgerät 14 eingesetzt.

Das Verfahren nach der Erfindung wird mit einer Anordnung nach den Fig. 1 und 2 beispielsweise wie im Folgenden beschrieben durchgeführt. Dabei wird zunächst angenommen, daß nur im Endenabschluß 3 ein Druckmeßgerät vorhanden ist, nämlich das Druckmeßgerät 15.

Flüssiger Stickstoff mit einer Temperatur von etwa 67 K wird im Bereich des Endenabschlusses 4 als Kühlmittel mittels der Pumpe 12 in den Kryostat 2 gepumpt, und zwar beispielsweise mit einem Druck von etwa 20 bar. Das Ventil 13 ist dabei geöffnet, also für den Stickstoff durchlässig. Sobald das Kabel 1 bzw. dessen Leiter 9 auf die für die Herstellung der Supraleitfähigkeit erforderliche Temperatur von beispielsweise etwa 67 K abgekühlt ist, wird dasselbe zur Stromübertragung an eine Spannungsquelle angeschlossen. Der Stickstoff wird mit einer Geschwindigkeit von beispielsweise 0,1 m/sec bis 1,0 m/sec durch den Kryostat 2 bewegt und am Ende der Übertragungsstrecke im Endenabschluß 3 zur Rückkühlung abgeleitet. Der Druck des Stickstoffs nimmt mit zunehmender Entfernung von der Einspeisestelle im Endenabschluß 4 ab. Er soll beispielsweise 15 bar nicht unterschreiten. Das Druckmeßgerät 15 wird entsprechend eingestellt.

Wenn im Verlauf der Übertragungsstrecke durch mechanische Beschädigung des Kryostats 2 ein Leck in demselben entsteht, tritt Stickstoff durch das Leck aus dem Kryostat 2 aus. Als Folge davon sinkt der Druck des Stickstoffs im Kryostat 2 schnell bzw. schlagartig ab. Das wird von dem Druckmeßgerät 15 erkannt. Sobald der Druck geringer ist als 15 bar, wird das Ventil 13 durch ein Signal geschlossen, das vom Druckmeßgerät 15 gesendet wird. Gleichzeitig kann ebenfalls durch ein elektrisches Signal des Druckmeßgeräts 15 die Pumpe 12 abgeschaltet werden. Die Zufuhr von Stickstoff an den Kryostat 2 wird dadurch abgebrochen. Gleichzeitig kann das Kabel 1 von der Spannungsquelle getrennt werden.

Die Unversehrtheit des Kryostats 2 kann zusätzlich auch dahingehend überwacht werden, ob beispielsweise nur eine Beschädigung des äußeren Rohres 5 desselben vorliegt, ohne daß ein vollständiges Leck im Kryostat 2 auftritt. Dazu kann entlang der Übertragungsstrecke am Kryostat 2 außen auf seiner ganzen Länge eine auf Kälte reagierende Sensoreinheit als überwachende Einheit angebracht werden. Die Sensoreinheit kann aus einer Vielzahl von Temperatursensoren oder auch aus mindestens einem Lichtwellenleiter bestehen, welche auf die Kälte reagieren, die im Falle einer Beschädigung aus der Vakuumisolierung 6 bzw. aus dem äußeren Rohr 5 des Kryostats austritt. Die Temperatursensoren bzw. der Lichtwellenleiter, in dem durch die Kälte eine erhebliche Erhöhung der Dämpfung erzeugt wird, können ebenfalls über elektrische Leitungen mit dem Ventil 13 und gegebenenfalls der Pumpe 12 verbunden sein. Ihre Signale führen dann ebenfalls zum Schließen des Ventils 13 und zum Abschalten der Pumpe 12, ohne daß der Druck des Kühlmittels im Kryostat 2 seine Untergrenze unterschritten hat.

## Patentansprüche

1. Verfahren zum Betrieb einer Anordnung mit mindestens einem supraleitfähigen Kabel (1), das von einem Kryostat (2) umgeben ist, welcher aus zwei konzentrisch zueinander angeordneten, eine Vakuumisolierung (7) zwischen sich einschließenden metallischen Rohren (5,6) besteht und welcher neben dem Kabel einen Hohlraum (8) zum Durchleiten eines unter Druck stehenden Kühlmittels umschließt, **dadurch gekennzeichnet,**
- **daß** zumindest an einem Ende des Kryostats (2) ein mit demselben verbundener Vorratsraum (11) für das flüssige Kühlmittel angeordnet wird,
- **daß** eine das Kühlmittel beim Betrieb der Anordnung in den Kryostat (2) hineindrückende Pumpe (12) verwendet wird und
- **daß** zumindest im Zuführungsweg des Kühlmittels vom Vorratsraum (11) zum Kryostat (2) ein beim Betrieb der Anordnung offenes Ventil (13) angeordnet wird, das mit mindestens einer die Unversehrtheit des Kryostats (2) überwachenden Einheit verbunden ist und das bei Vorliegen eines einer Fehlermeldung entsprechenden Signals der überwachenden Einheit zur Unterbrechung der Zufuhr des Kühlmittels an den Kryostat (2) gesperrt wird.

2. Verfahren nach Anspruch 1, **dadurch gekennzeichnet, daß** als überwachende Einheit mindestens ein Druckmeßgerät (14,15) verwendet wird, das den Druck des Kühlmittels im Kryostat (2) überwacht.

3. Verfahren nach Anspruch 1, **dadurch gekennzeichnet, daß** außerhalb des Kryostats (2) auf seiner ganzen Länge eine auf Kälte reagierende Sensoreinheit als überwachende Einheit angeordnet wird.

4. Verfahren nach Anspruch 3, **dadurch gekennzeichnet, daß** entlang des Kryostats (2) eine Vielzahl von Temperatursensoren angeordnet wird.

5. Verfahren nach Anspruch 3, **dadurch gekennzeichnet, daß** entlang des Kryostats (2) zumindest ein Lichtwellenleiter angeordnet wird.

## Claims

1. Method for operation of an arrangement having at least one superconducting cable (1), which is surrounded by a cryostat (2) which consists of two metallic tubes (5,6), which are arranged concentrically to one another and enclose a vacuum insula tio n (7) between the m, and which cryostat (12) surrounds not only the cable but also a cavity (8) for a pressurized coolant to pass through, **characterized in**
- **that** a reservoir area (11), which is connected to the cryostat (2), for the liquid coolant is arranged at least at one end of the cryostat (2),
- **that** a pump (12) is use d which forces the coolant into the c ryo stat (2) during operation of the arrangement and
- **that** a valve (13) is arranged at least in the supply path of the coolant from the reservoir are a (11) to the cryostat (2), which valve (13) isopen during operation of the arrangement, is connected to at least one unit monitoring the undamaged statusofthe cryostat (2) and isblocked when a signalwhich correspends to a fault message is present from the monitoring unit, in order to interrupt the sup p ly of the coolant to the cryostat (2).

2. Method according to claim 1, **characterized in that** at least one pressure measurement instrument (14, 15) is used as the monitoring unit, which monitors the pressure of the coolant in the cryostat (2).

3. Method according to claim 1, **characterized in that** a sensor unit, which reacts to cold, is arranged as the monitoring unit outside the cryostat (2) over its entire length.

4. Method according to claim 3, **characterized in that** plurality of temperature sensors are arranged along the cryostat (2).

5. Method according to claim 3, **characterized in that** at least one optical waveguide is arranged along the cryostat (2).

## Revendications

1. Procédé pour faire fonctionner un agencement comprenant au moins un câble (1) supraconducteur, qui est entouré d'un cryostat (2), qui comprend deux tubes (5, 6) métalliques, disposésde façon concentrique l'un parrapport à l'autre et formant une isolation parvide (7) entre eux, et qui entoure à côté du câble une cavité (8) pour le passage d'un réfrigérant mis sous pression, **caractérisé**
- **en ce qu'**un espace de réserve (11) relié au cryostatpourle refrigérant liquide estdisposé aumoinssurune extrémité du cryostat (2),
- **en ce qu'**une pompe (12) enfonçant le refrigérant lors du fonctionnement de l'agencement dans le cryostat (2) est utilisé et
- **en ce qu'**une vanne (13) ouverte lors du fonctionnement de l'agencement est disposée au moins dans le chemin d'alimentation du refrigérant allant de l'espace de réserve (11) au cryostat (2), laquelle vanne est reliée à au moins une unité contrôlant l'aspect intact du cryostat (2) et qui, en cas de présence d'un signal correspondant à un signal d'erreur de l'unité de contrôle, est bloquée pour interrompre l'alimentation du cryostat (2) en réfrigérant.

2. Procédé selon la revendication 1, **caractérisé en ce qu'**au moins un appareil de mesure de pression (14, 15), qui contrôlé la pression du réfrigérant dans le cryostat (2), est utilisé comme unité de contrôle.

3. Procédé selon la revendication 1, **caractérisé en ce qu'**une unité de capteur réagissant au froid est disposée en tant qu'unité de contrôle à l'extérieur du cryostat (2) sur l'ensemble de sa longueur.

4. Procédé selon la revendication 3, **caractérisé en ce qu'**une pluralité de capteurs de température est disposée le long du cryostat (2).

5. Procédé selon la revendication 3, **caractérisé en ce qu'**au moins un guide d'ondesde lumière estdisposé le long du cryostat (2).
